# EUROPEAN PATENT APPLICATION

(11) **EP 2 330 368 A2**
(43) Date of publication of application: **08.06.2011**
(21) Application number: 10251320.7
(22) Date of filing: 23.07.2010
(51) Int. Cl.: F25B 7/00

(54) **Heat pump type cooling/heating apparatus**

(30) Priority: 20.11.2009 KR 20090112740
(71) Applicant: LG Electronics Inc., Youngdungpo-ku Seoul (KR)
(72) Inventor: Chin, Sim Won, Changwon-si Kyungsangnam-do 641-110 (KR); Lee, Eung Yul, Changwon-si Kyungsangnam-do 641-110 (KR); Kim, Bum Suk, Changwon-si Kyungsangnam-do 641-110 (KR); Park, Sang Kyoung, Changwon-si Kyungsangnam-do 641-110 (KR)
(74) Representative: Palmer, Jonathan R.

(57) **Abstract**

Disclosed is a heat pump type cooling/heating apparatus including: a coolant injection path 26 or 26' that is split between the cascade heat exchanger 10 and an evaporator 14 of the low temperature refrigeration cycle A to inject a coolant into a low pressure side compressor 6 of the low temperature refrigeration cycle A or split between the water coolant heat exchanger 20 and the cascade heat exchanger 10 to inject a coolant into a high pressure side compressor 16 of the high temperature refrigeration cycle A; and a gaseous coolant adjustment valve 30 or 30' that is provided in the coolant injection path 26 or 26' and adjusted corresponding to the load of the destination 1 or 2.

## Description

### BACKGROUND OF THE INVENTION

### 1. Field of the Invention

The present invention relates to a heat pump type cooling/heating apparatus, and more particularly to a heat pump type cooling/heating apparatus that heats water for room heating using a refrigeration cycle apparatus.

### 2. Description of the Conventional Art

In general, heat pumps are room cooling/heating apparatuses that transfer heat from a low temperature heat source to a high temperature destination and vice versa using a coolant.

A heat pump includes a compressor, a condenser, an expander, and an evaporator. Recently, heat pump type cooling/heating apparatuses that heat water with a coolant for room heating have gained popularity in order to minimize consumption of fossil fuels.

However, conventional heat pump type cooling/heating apparatus suffer from a failure to heat the room or low performance due to frequent defrosting operations that are needed when the evaporator is frozen as often happens in cooler geographical regions.

### SUMMARY OF THE INVENTION

An object of the present invention is to provide a heat pump type cooling/heating apparatus that may efficiently supply hot water to a destination requiring it.

Another object of the present invention is to provide a heat pump type cooling/heating apparatus that may enhance heating performance by preventing a lowering in efficiency in cold or cool geographical regions.

In accordance with an aspect of the present invention, there is provided a heat pump type cooling/heating apparatus including a cascade cycle unit that includes a cascade heat exchanger that performs a heat exchange between a first coolant of a low temperature refrigeration cycle and a second coolant of a high temperature refrigeration cycle, and a water coolant heat exchanger that heats water while the second coolant of the high temperature refrigeration cycle is condensed, wherein the water coolant heat exchanger is connected to a destination via a water circulation path, including: a coolant injection path that is split between the cascade heat exchanger and an evaporator of the low temperature refrigeration cycle to inject a coolant into a low pressure side compressor of the low temperature refrigeration cycle or split between the water coolant heat exchanger and the cascade heat exchanger to inject a coolant into a high pressure side compressor of the high temperature refrigeration cycle; and a gaseous coolant adjustment valve that is provided in the coolant injection path and adjusted corresponding to the load of the destination.

According to an embodiment of the present invention, the heat pump type cooling/heating apparatus further includes a gas/liquid separator that separates a coolant condensed in the cascade heat exchanger into a liquid coolant and a gaseous coolant; and an auxiliary expansion mechanism that is provided between the cascade heat exchanger and the gas/liquid separator to expand a coolant.

The low temperature refrigeration cycle may form a closed path running from a low pressure side compressor through the cascade heat exchanger and a first expansion mechanism to an evaporator, and the high temperature refrigeration cycle forms a closed path running from a high pressure side compressor through the water coolant heat exchanger and a second expansion mechanism to the cascade heat exchanger, and wherein the gas/liquid separator is provided between the cascade heat exchanger and the first expansion mechanism.

According to another embodiment of the present invention, the heat pump type cooling/heating apparatus further includes a gas/liquid separator that separates a coolant condensed in the water coolant heat exchanger into a liquid coolant and a gaseous coolant; and an auxiliary expansion mechanism that is provided between the water coolant heat exchanger and the gas/liquid separator to expand a coolant.

The low temperature refrigeration cycle forms a closed path running from a low pressure side compressor through the cascade heat exchanger and a first expansion mechanism to an evaporator, and the high temperature refrigeration cycle forms a closed path running from a high pressure side compressor through the water coolant heat exchanger and a second expansion mechanism to the cascade heat exchanger, and wherein the gas/liquid separator is provided between the water coolant heat exchanger and the second expansion mechanism.

The low pressure side compressor, the cascade heat exchanger, the first expansion mechanism, the evaporator, the high pressure side compressor, the second expansion mechanism, the water coolant heat exchanger, the coolant injection path, the gaseous coolant adjustment valve, the gas/liquid separator, and the auxiliary expansion mechanism may be installed in a single unit.

The low pressure compressor, the first expansion mechanism, and the evaporator are installed in an outdoor unit, and wherein the cascade heat exchanger, the high pressure side compressor, the second expansion mechanism, and the water coolant heat exchanger may be installed in a cascade unit, and wherein the coolant injection path, the gaseous coolant adjustment valve, the gas/liquid separator, and the auxiliary expansion mechanism are installed in one of the outdoor unit and the cascade unit.

The cascade unit may be integrally mounted on the outdoor unit.

The cascade unit may be separated from the outdoor unit.

The heat pump type cooling/heating apparatus may further include a load sensor that senses the load of the destination; and a controller that controls the gaseous coolant adjust valve according to a sensing result of the load sensor.

The load sensor may be provided over the water circulation path.

The controller may open the gaseous coolant adjustment valve when a temperature sensed by the load sensor is less than a predetermined valve, and close the gaseous coolant adjustment valve when a temperature sensed by the load sensor is more than the predetermined valve.

The destination may include a room heating unit connected to the water circulation path and a water heating unit connected to the water circulation path.

At least one of the low pressure side compressor 6 and the high pressure compressor 16, which is connected to the coolant injection path 26 or 26', may be configured as one of a two stage compressor, a screw compressor, and a scroll compressor.

At least one of the low pressure side compressor and the high pressure compressor, which is connected to the coolant injection path, may be configured as a twin rotary compressor.

The heat pump type cooling/heating apparatus according to the present invention as configured above may include the cascade heat exchanger with the low temperature refrigeration cycle and the high temperature refrigeration cycle, and thus, may make the temperature of water supplied to the apparatus higher than the conventional apparatuses having a single refrigeration cycle. Further, since the gaseous coolant is gas injected into the compressor over the low temperature cycle or compressor over the high temperature cycle, the arrangement is capable of enhancing heating performance.

Since the gaseous coolant is gas injected into the low pressure side compressor over the low temperature refrigeration cycle, it may be possible to minimize a lowering in volume flow rate that occurs at the evaporator over the low temperature refrigeration cycle when the temperature of the exterior is low. Additionally, the condensation volume of the cascade heat exchanger may be raised, and this allows for efficient room heating and high defrosting performance.

Since the gaseous coolant is gas injected into the compressor over the low temperature refrigeration cycle, it may be possible to lower the maximum management temperature of the compressor over the low temperature refrigeration cycle and enhance reliability of the compressor over the low temperature refrigeration cycle.

Since the gaseous coolant is gas injected into the high pressure side compressor over the high temperature refrigeration cycle, it may be possible to increase the condensation volume of the water coolant heat exchanger, thus leading to improving room heating performance and supplying water at higher temperature.

### BRIEF DESCRIPTION OF THE DRAWING

Fig. 1 is a view schematically illustrating a heat pump type cooling/heating apparatus according to a first embodiment of the present invention.
Fig. 2 is a block diagram illustrating a heat pump type cooling/heating apparatus according to an embodiment of the present invention.
Fig. 3 is an expanded view illustrating main parts of the cascade cycle unit shown in Fig. 1.
Fig. 4 is a graph illustrating a P-H relationship in a heat pump type cooling/heating apparatus according to an embodiment of the present invention.
Fig. 5 is a view schematically illustrating a heat pump type cooling/heating apparatus according to a second embodiment of the present invention.
Fig. 6 is a view schematically illustrating a heat pump type cooling/heating apparatus according to a third embodiment of the present invention.
Fig. 7 is a front view schematically illustrating a cascade unit and an outdoor unit separated from the cascade unit, which are included in the heat pump type cooling/heating apparatus according to the third embodiment of the present invention.
Fig. 8 is a front view schematically illustrating the cascade unit and the outdoor unit attached to the cascade unit, which are included in the heat pump type cooling/heating apparatus according to the third embodiment of the present invention.

### DETAILED DESCRIPTION OF THE PREFERRED EMBODIMENT

Hereinafter, embodiments of the present invention will be described in greater detail with reference to accompanying drawings.

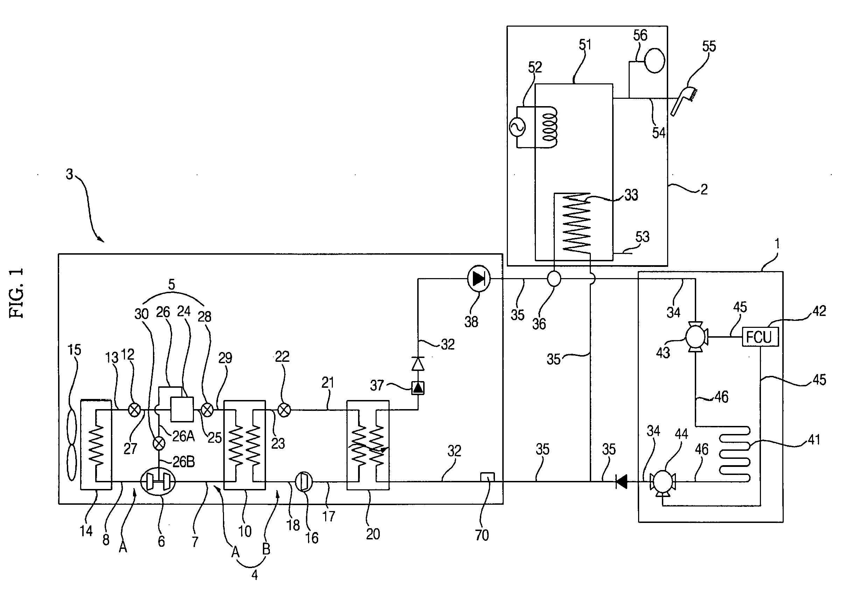

Fig. 1 is a view schematically illustrating a heat pump type cooling/heating apparatus according to a first embodiment of the present invention.

Referring to Fig. 1, the heat pump type cooling/heating apparatus according to the first embodiment of the present invention includes a refrigeration cycle apparatus 3 that heats water using a coolant, circulates the heated water, and supplies the heated water to destinations 1 and 2 requiring hot water.

The destinations 1 and 2 include a room heating unit 1 that heats a room using the water heated by the coolant and a water heating unit 2 that discharges the heated water to the outside through a discharging device, such as a shower head. The room heating unit 1 and the water heating unit 2 will be described in detail later.

The refrigeration cycle apparatus 3 may include a cascade cycle unit 4 and a gas injection mechanism 5.

The cascade cycle unit 4 may include a cascade heat exchanger that performs a heat exchange between a first coolant of a low temperature refrigeration cycle A and a second coolant of a high temperature refrigeration cycle B, and a water coolant heat exchanger in which the second coolant of the high temperature refrigeration cycle B is condensed while heating water.

The first coolant and the second coolant have the different condensation temperature and evaporation temperature. For example, in a case where the first coolant has a low condensation temperature and evaporation temperature of R410A, the second coolant may have a higher condensation temperature and evaporation temperature of R134a than the first coolant.

The gas injection mechanism 5 expands the coolant condensed in one of the low temperature refrigeration cycle A and the high temperature refrigeration cycle B, separates a gaseous coolant from the condensed coolant, and then injects the separated gaseous coolant into a compressor in the refrigeration cycle in which the gas injection mechanism 5 is provided. The gas injection mechanism 5 may be included in at least one of the low temperature refrigeration cycle A and the high temperature refrigeration cycle B.

The low temperature refrigeration cycle A, the high temperature refrigeration cycle B, and the gas injection mechanism 5 will now be described in greater detail assuming that the gas injection mechanism 5 is provided in the low temperature refrigeration cycle A.

The low temperature refrigeration cycle A forms a closed path running from a low pressure side compressor 6 through a cascade heat exchanger 10 and a first expansion mechanism 12 to an evaporator 14. The first coolant is compressed in the low pressure side compressor 6, condensed in the cascade heat exchanger 10, expanded in the first expansion mechanism 12, and evaporated in the evaporator 14. The second coolant may be evaporated while the first coolant repeats the compression, condensation, expansion, and evaporation.

The low pressure side compressor 6, which compresses the first coolant, is connected to the cascade heat exchanger 10 and a low pressure side compressor discharge pipe 7. The low pressure side compressor 6 may be connected to the evaporator 14 and a low pressure side compressor suction pipe 8.

The low pressure side compressor 6 may be configured as a two stage compressor, a twin rotary compressor, a screw compressor, or a scroll compressor so that the gaseous coolant is gas injected to the low pressure side compressor 6 in a case where the gas injection mechanism 5 is provided in the low temperature refrigeration cycle A.

A two stage compressor, which is connected in series with a coolant path, includes a first compression part and a second compression part. A coolant is first condensed in the first compression part and then re-condensed in the second compression part. The coolant evaporated in the evaporator 14 is sucked and compressed in the first compression part before discharge. The gas injection mechanism 5 is connected to a connection path between the first compression part and the second compression part. The gaseous coolant injected from the gas injection mechanism 5 is mixed with the coolant that is compressed and discharged by the first compression part, and then the mixed material may be compressed and discharged by the second compression part.

A twin rotary compressor includes first and second compression parts that perform compression by the same motor. The coolant evaporated in the evaporator 14 is sucked, compressed, and discharged by the first compression part. The gas injection mechanism 5 is connected to the second compression part. The coolant evaporated in the evaporator 14 is compressed and discharged by the first compression part. The gaseous coolant injected by the gas injection mechanism 5 may be compressed and discharged by the second compression part.

A screw compressor is a rotary displacement compressor that includes a pair of male and female screw rotors engaged with each other, wherein a gaseous coolant is compressed between the male and female screw rotors. The coolant evaporated in the evaporator 14 is sucked and compressed in a compression chamber of the screw compressor. The gas injection mechanism 5 is connected to an injection port communicating with one side of the compression chamber of the screw compressor. The gaseous coolant injected from the gas injection mechanism 5 may be mixed with the coolant compressed in the screw compressor, and the resultant material may be compressed and discharged.

A scroll compressor compresses a coolant by rotating a rotational scroll in a compression chamber. The coolant evaporated in the evaporator 14 is sucked and compressed in the compression chamber of the scroll compressor. The gas injection mechanism 5 is connected to an injection port communicating with one side of the compression chamber of the scroll compressor. The gaseous coolant injected from the gas injection mechanism 5 is mixed with the coolant condensed in the scroll compressor, and the resultant material may be compressed and discharged.

The cascade heat exchanger 10 includes a condensation path to condense the first coolant passing therethrough and an evaporation path to evaporate the second coolant passing therethrough. A heat transfer member may be provided between the condensation path and the evaporation path for heat exchange between the first coolant and the second coolant.

The cascade heat exchanger 10 may be configured as a double pipe heat exchanger where a condensation path and an evaporation path are located inside and outside of a heat transfer member, or a plate type heat exchanger where a condensation path and an evaporation path are located alternate to each other with a heat transfer member therebetween.

The cascade heat exchanger 10 may be connected to the first expansion mechanism 12 and the gas injection mechanism 5.

The first expansion mechanism 12 expands the first coolant sucked into the evaporator 14 and may be configured as an electronic expansion valve that may adjust the degree of opening to control the suction superheat of the low temperature refrigeration cycle A.

The first expansion mechanism 12 may be connected to the evaporator 14 through a pipe 13 between the first expansion mechanism 12 and the evaporator 14.

The evaporator 14 may be configured as an air-cooled heat exchanger that introduces external air into the evaporator 14 and evaporates the coolant using the introduced air. The cascade cycle unit 4 may further include an outdoor fan 15 that blows external air into the evaporator 14.

The high temperature refrigeration cycle B forms a closed path running from a high pressure side compressor 16 through a water coolant heat exchanger 20 and a second expansion mechanism 22 to the cascade heat exchanger 10. The second coolant is compressed in the high pressure side compressor 16, heat exchanged with water and condensed in the water coolant heat exchanger 20, expanded in the second expansion mechanism 22, and heat exchanged with the first coolant and evaporated in the cascade heat exchanger 10. The water may be heated while the second coolant repeats the compression, condensation, expansion, and evaporation.

The high pressure side compressor 16, which compresses the second coolant, may be connected to the water coolant heat exchanger 20 via a high pressure side compressor discharge pipe 17. The high pressure side compressor 16 may be connected to the cascade heat exchanger 10 via a high pressure side compressor suction pipe 18.

The water coolant heat exchanger 20 is connected to a water circulation path that is a closed path including the room heating unit 1 and the water heating unit 2. The water circulation path will be described in detail later.

The water coolant heat exchanger 20 includes a condensation path to condense a coolant passing therethrough and a water heating path to heat water passing therethrough. The water coolant heat exchanger 20 may be configured as a double pipe heat exchanger where the condensation path and the water heating path are located inside and outside of a heat transfer member, or a plate type heat exchanger where the condensation path and the water heating path are located alternate to each other with a heat transfer member therebetween.

The water coolant heat exchanger 20 may be connected to the second expansion mechanism 22 through a pipe 21 between the water coolant heat exchanger 20 and the second expansion mechanism 22.

The second expansion mechanism 22 expands the second coolant sucked into the cascade heat exchanger 10 and may be configured as an electronic expansion valve that may adjust the degree of opening to control the suction superheat of the high temperature refrigeration cycle B.

The second expansion mechanism 22 may be connected to the cascade heat exchanger 10 through a pipe 23 between the second expansion mechanism 22 and the cascade heat exchanger 10.

The gas injection mechanism 5 may expand the first coolant condensed in the cascade heat exchanger 10, separate a liquid coolant and a gaseous coolant from the first coolant, and inject only the gaseous coolant to the low pressure side compressor 6.

The gas injection mechanism 5 may include a gas/liquid separator 24 that separates a liquid coolant and a gaseous coolant from the coolant condensed in the cascade heat exchanger 10, a coolant injection path 26 that injects the gaseous coolant separated by the gas/liquid separator 24 to the low pressure side compressor 6, an auxiliary expansion mechanism 28 that expands the coolant flowing from the cascade heat exchanger 10 to the gas/liquid separator 24, and a gaseous coolant adjustment valve 30 that is provided over the coolant injection path 26.

The gas/liquid separator 24 may be provided between the cascade heat exchanger 10 and the first expansion mechanism 12.

The gas/liquid separator 24 may be connected to the auxiliary expansion mechanism 28 through a gas/liquid separator suction pipe 25, connected to the first expansion mechanism 12 through a liquid phase pipe 27, and connected to the low pressure side compressor 6 through the coolant injection path 26. The coolant having passed through the auxiliary expansion mechanism 28 flows into the gas/liquid separator 24 via a gas/liquid separator suction pipe 25 and separates into a gaseous coolant and a liquid coolant in the gas/liquid separator 24. The gaseous coolant may be injected to the low pressure side compressor 6 through the coolant injection path 26 and the liquid coolant may flow into the first expansion mechanism 12 through the liquid phase pipe 27.

One end of the coolant injection path 26 may be connected to the gas/liquid separator 24 and the other end may be connected to the low pressure side compressor 6.

The coolant injection path 26 may include a plurality of gas injection pipes 26A and 26B. The gas injection pipes 26A and 26B may include a first gas injection pipe 26A that connects between the gas/liquid separator 24 and the gaseous coolant adjustment valve 30 and a second gas injection pipe 26B that connects between the gaseous coolant adjustment valve 30 and the low pressure side compressor 6.

The auxiliary expansion mechanism 28 expands the coolant condensed in the cascade heat exchanger 10 before the coolant is sucked into the gas/liquid separator 24. The auxiliary expansion mechanism 28 may be provided between the cascade heat exchanger 10 and the gas/liquid separator 24.

The auxiliary expansion mechanism 28 may be configured as an electronic expansion valve that may adjust the degree of opening to prevent the liquid coolant in the gas/liquid separator 24 from flowing to the coolant injection path 26.

The auxiliary expansion mechanism 28 may be connected to the cascade heat exchanger 10 through a pipe 29 between the cascade heat exchanger 10 and the auxiliary expansion mechanism 28.

The gaseous coolant adjustment valve 30 controls the gaseous coolant discharged from the second expansion mechanism 22. The gaseous coolant adjustment valve 30 may be configured as an opening/closing valve that performs the opening/closing operation under the On/Off control, or an electronic expansion valve that may control the degree of opening.

The water circulation path runs through the water coolant heat exchanger 20, the room heating unit 1, and the water heating unit 2, so that water heated in the water coolant heat exchanger 20 passes through at least one of the room heating unit 1 and the water heating unit 2 and then returns to the water coolant heat exchanger 20.

The water circulation path may include a cascade cycle unit pipe 32 that is located inside the refrigeration cycle apparatus 3, a water heating pipe 33 that allows water to pass through the water heating unit 2, a room heating pipe 34 that allows water to pass through the room heating unit 1, and a connection pipe 35 that connects the cascade cycle unit pipe 32 to the water heating pipe 33 and the room heating pipe 34.

A hot water adjustment valve 36 may be positioned over the connection pipe 35 to guide the water heated in the water coolant heat exchanger 20 to at least one of the water heating pipe 33 and the room heating pipe 34. The water heating pipe 33 and the room heating pipe 34 may be connected to the water coolant heat exchanger 20 through the connection pipe 35.

The cascade cycle unit 4, the room heating unit 1, and the water heating unit 2 will now be described in greater detail.

The cascade cycle unit 4 may include a flow switch 37 that senses the flow of water passing through the cascade cycle unit pipe 32 and a circulation pump 38 that is positioned over the cascade cycle unit pipe 32 to pump water for circulation.

The room heating unit 1 may include a floor heating unit 41 that heats the floor of a room and an air heating unit 42 that heats air in the room.

The floor heating unit 41 may be configured as a meander line embedded in the floor of the room.

The air heating unit 42 may be configured as a fan coil unit or a radiator.

Room heating water adjustment valves 43 and 44 may be positioned over the room heating pipe 34 to guide water to at least one of the floor heating unit 41 and the air heating unit 42. The floor heating unit 41 may be connected to the room heating water adjustment valves 43 and 44 via an air heating pipe 45, and the air heating unit 42 may be connected to the room heating water adjustment valves 43 and 44 via a floor heating pipe 46.

The water heating unit 2 supplies hot water required for a user to take a shower or wash the dishes, and may include a hot water tank 51 that contains water and a hot water auxiliary heater 52 that is provided in the hot water tank 51.

The hot water tank 51 may be connected to a cool water inlet 53 that introduces cool water to the hot water tank 51 and a hot water outlet 54 that discharges hot water out of the hot water tank 51.

The water heating pipe 33 may be provided in the hot water tank 51.

The hot water outlet 54 may be connected to a hot water discharging device 55, such as a shower head.

A cool water inlet 56 may be connected to the hot water outlet 54 so that cool water may be discharged to the outside through the hot water discharging device 55.

In the cascade cycle unit 4, the room heating unit 1, and the water heating unit 2 as described above, if the hot water adjustment valve 36 is subjected to a water heating mode for supplying hot water when a circulation pump 39 is driven, water heated in the water coolant heat exchanger 20 may flow through the cascade cycle unit pipe 32 and the connection pipe 35 into the water heating pipe 33 to heat water in the hot water tank 51 and then return to the water coolant heat exchanger 20 via the connection pipe 35 and the cascade cycle unit pipe 32.

If the hot water adjustment valve 36 is subjected to a room heating mode for heating the room when the circulation pump 39 is driven, the water heated through heat transfer with the second coolant in the water coolant heat exchanger 20 may pass through the cascade cycle unit pipe 32 and the connection pipe 35 into the room heating pipe 34 to heat at least one of the floor heating unit 41 and the air heating unit 42 and then return to the water coolant heat exchanger 20 via the room heating pipe 34, the connection pipe 35, and the cascade cycle unit pipe 32.

If the room heating water adjustment valves 43 and 44 are subjected to an air heating mode for heating air in the room, the water passes through the air heating pipe 45, the air heating unit 42, and the air heating pipe 45 to the room heating pipe 34, and if the room heating water adjustment valves 43 and 44 are subjected to a floor heating mode for heating the floor in the room, the water passes through the floor heating pipe 46, the floor heating unit 41, and the floor heating pipe 46 to the room heating pipe 34.

In the heat pump type cooling/heating apparatus according to the first embodiment of the present invention, the low pressure side compressor 6, the cascade heat exchanger 10, the first expansion mechanism 12, the evaporator 14, the high pressure side compressor 16, the water coolant heat exchanger 20, the second expansion mechanism 22, the coolant injection path 26, the gaseous coolant adjustment valve 30, the gas/liquid separator 24, and the auxiliary expansion mechanism 28 may be installed together in a single unit to constitute the refrigeration cycle apparatus 3.

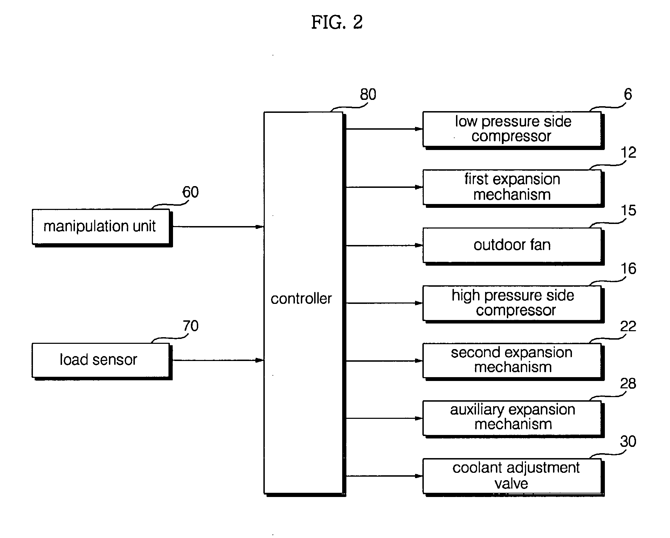

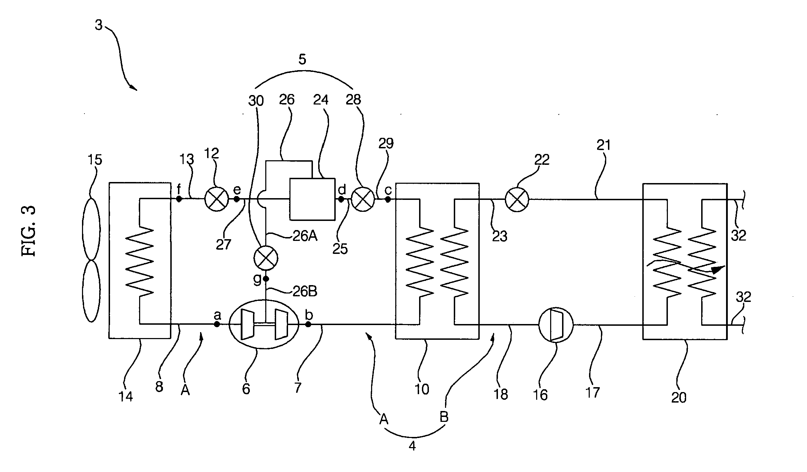

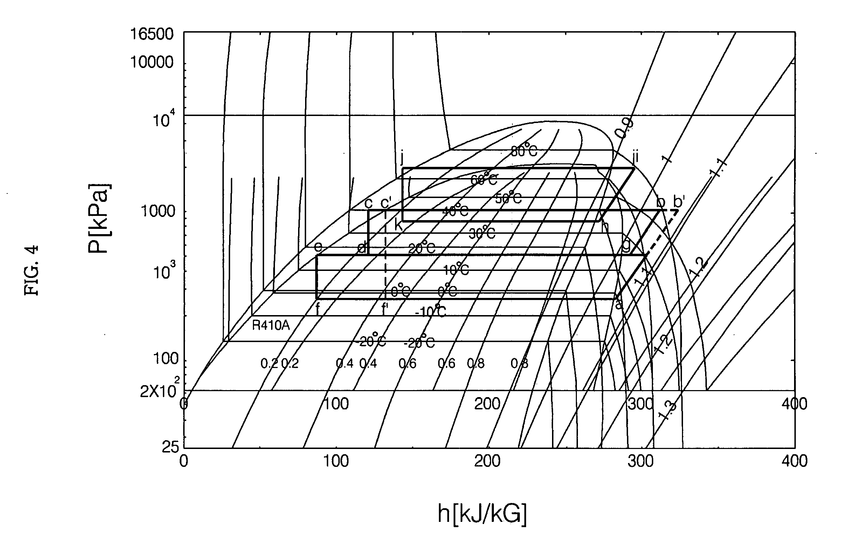

Fig. 2 is a block diagram illustrating a heat pump type cooling/heating apparatus according to an embodiment of the present invention, Fig. 3 is an expanded view illustrating main parts of the cascade cycle unit shown in Fig. 1, and Fig. 4 is a graph illustrating a P-H relationship in a heat pump type cooling/heating apparatus according to an embodiment of the present invention.

The heat pump type cooling/heating apparatus according to the embodiment of the present invention may further include a manipulation unit 60 that inputs various instructions including operation/stop of the heat pump type cooling/heating apparatus, a load sensor 70 that senses the load of the heat pump type cooling/heating apparatus, and a controller 80 that controls the low pressure side compressor 6, the first expansion mechanism 12, the outdoor fan 15, the high pressure side compressor 16, the second expansion mechanism 22, the auxiliary expansion mechanism 28, and the gaseous coolant adjustment valve 30 based on the operation of the manipulation unit 60 and the sensing result of the load sensor 70.

The load sensor 70 may include a hot water temperature sensor that senses the load of the room heating unit 1 and the water heating unit 2.

The hot water temperature sensor may be provided at a side of the water circulation path to sense the temperature of water circulating the water coolant heat exchanger 20 and at least one of the room heating unit 1 and the water heating unit 2.

The hot water temperature sensor may be provided to sense the temperature of water that is cooled in at least one of the room heating unit 1 and the water heating unit 2 and then returns to the water coolant heat exchanger 20. For example, the hot water temperature sensor may be installed in the cascade cycle unit pipe 32.

The load sensor 70 may include an outdoor temperature sensor that determines whether the outdoor temperature is low or not.

The outdoor temperature sensor may be provided in the evaporator 14 to sense the temperature of air blowing from the exterior to the evaporator 14.

If the load sensed by the load sensor 70 is not less than a predetermined load value, the controller 80 may perform an injection mode that injects the gaseous coolant through the gas injection mechanism 5, and if the load sensed by the load sensor 70 is not more than a predetermined load value, the controller 80 performs a general mode that stops injecting the gaseous coolant through the gas injection mechanism 5.

The controller 80 controls the gaseous coolant adjustment valve 30 based on whether the operation mode is general mode or gas injection mode. In case of the general mode, the controller 80 may close the gaseous coolant adjustment valve 30 and in case of the gas injection mode, the controller 80 may open the gaseous coolant adjustment valve 30.

If the temperature of how water sensed by the hot water temperature sensor is less than a predetermined temperature value, the controller 80 may determine that the load is not less than the predetermined load value to operate the heat pump type cooling/heating apparatus, especially the refrigeration cycle apparatus 3, in the gas injection mode. If the temperature of how water sensed by the hot water temperature sensor is not less than the predetermined temperature value, the controller 80 may determine that the load is less than the predetermined load value to operate the heat pump type cooling/heating apparatus, especially the refrigeration cycle apparatus 3, in the general mode.

If the temperature of how water sensed by the outdoor temperature sensor is not more than a predetermined temperature value, the controller 80 may determine that the load is not less than the predetermined load value to operate the heat pump type cooling/heating apparatus, especially the refrigeration cycle apparatus 3, in the gas injection mode. If the temperature of how water sensed by the outdoor temperature sensor is more than the predetermined temperature value, the controller 80 may determine that the load is less than the predetermined load value to operate the heat pump type cooling/heating apparatus, especially the refrigeration cycle apparatus 3, in the general mode.

In response to an instruction of operating the heat pump type cooling/heating apparatus from the manipulation unit 60, the controller 80 drives the low pressure side compressor 6 and the high pressure side compressor 16 and controls the first expansion mechanism 12 and the second expansion mechanism 22 to enable the first expansion mechanism 12 and the second expansion mechanism 22 to expand the coolant. Further, the controller 80 may drive the outdoor fan 15.

If the temperature sensed by the load sensor 70 exceeds a predetermined temperature value, the controller 80 may close the gaseous coolant adjustment valve 30. At the moment, the controller 80 may fully turn off the auxiliary expansion mechanism 28.

During the operation, the first coolant is compressed in the low pressure side compressor 6 and condensed in the cascade heat exchanger 10, and then sequentially passes through the auxiliary expansion mechanism 28 and the second expansion mechanism 22. Thereafter, the first coolant may be expanded while passing through the first expansion mechanism 12. The first coolant expanded in the first expansion mechanism 12 may exchange heat with external air to be evaporated while passing through the evaporator 14, and then return to the low pressure side compressor 6.

While the first coolant is compressed in the low pressure side compressor 6, the second coolant may be compressed in the high pressure side compressor 16, condensed in the water coolant heat exchanger 20 while heating water, expanded in the second expansion mechanism 22, evaporated while passing through the cascade heat exchanger 10 to exchange heat with the first coolant, and then return to the high pressure side compressor 16.

The refrigeration cycle apparatus 3 may heat water at higher temperature than a case where the low temperature refrigeration cycle A alone or the high temperature refrigeration cycle B alone is included.

On the other hand, if the temperature sensed by the load sensor 70 is not more than a predetermined temperature value, the controller 80 may open the gaseous coolant adjustment valve 30. At the moment, the controller 80 controls the auxiliary expansion mechanism 28 to have a predetermined degree of opening in order to enable the auxiliary expansion mechanism 28 to expand the first coolant. Besides the gaseous coolant adjustment valve 30 and the auxiliary expansion mechanism 28, the controller 80 may control the other components in the same way as the general mode.

During the above-mentioned control, the first coolant may be compressed in the low pressure side compressor 6, condensed in the cascade heat exchanger 10, expanded in the auxiliary expansion mechanism 28, and then introduced into the second expansion mechanism 22. The first coolant is separated into a gaseous coolant and a liquid coolant in the second expansion mechanism 22. The liquid coolant may be expanded while flowing into the first expansion mechanism 12, evaporate in the evaporator 14, and then suck and compress in the low pressure side compressor 6. On the other hand, the gaseous coolant may pass from the second expansion mechanism 22 through the coolant injection path 26 and the gaseous coolant adjustment valve 30 and inject into the low pressure side compressor 6 for compression.

In case of the general mode, while the first coolant goes through general compression, condensation, expansion, and evaporation procedures, the refrigeration cycle apparatus 3 is subjected to a cycle: a->b->c->f->a, as depicted in dashed lines in Fig. 4. In case of the gas injection mode, while the first coolant goes through compression, condensation, expansion, expansion, and evaporation procedures, the refrigeration cycle apparatus 3 is subjected to a cycle: a->b->c->d->e->f->a, as depicted in solid lines in Fig. 4, and part of the coolant discharged from the cascade heat exchanger 10 is subjected to a procedure: c->d->g->b as depicted in Fig. 4 while going through expansion and compression, so that the cascade heat exchanger 10 may have an increased condensation volume compared to the normal mode.

On the other hand, the second coolant may be compressed in the high pressure side compressor 16 while the first coolant is compressed in the low pressure side compressor 6. The second coolant may be condensed while water is heated in the water coolant heat exchanger 20, expanded in the second expansion mechanism 22, heat exchanged with the first coolant and evaporated while passing through the cascade heat exchanger 10, and then returned to the high pressure side compressor 16. The refrigeration cycle apparatus 3 perform compression, condensation, expansion, and evaporation while the second coolant goes through a cycle: h->i->j->k->h.

That is, the refrigeration cycle apparatus 3 may have further reduced compression work in the gas injection mode than the general mode, and may supply hot water to the refrigeration cycle apparatus 3 even when the temperature at the exterior is low and the apparatus is located in a cold site.

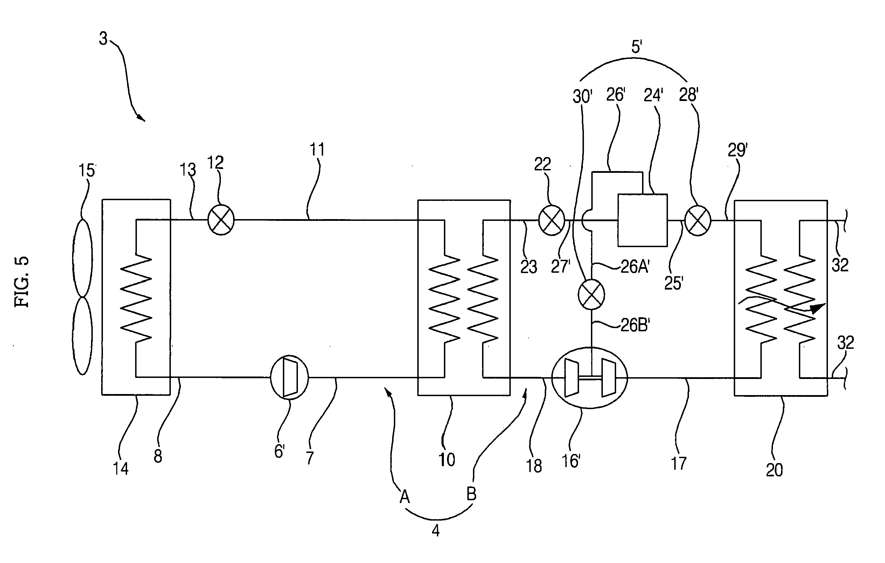

Fig. 5 is a view schematically illustrating a heat pump type cooling/heating apparatus according to a second embodiment of the present invention.

In the heat pump type cooling/heating apparatus according to the second embodiment of the present invention, a gas injection mechanism 5' may be provided in the high temperature refrigeration cycle B.

The gas injection mechanism 5' may be provided between the second expansion mechanism 22 and the water coolant heat exchanger 20 of the high temperature refrigeration cycle B, and connected to a high pressure side compressor 16' of the high temperature refrigeration cycle B.

In the low temperature refrigeration cycle A, a low pressure side compressor 6' may be connected to the cascade heat exchanger 10 via a low pressure side compressor discharge pipe 7, and connected to the evaporator 14 via a low pressure side compressor suction pipe 8.

In the low temperature refrigeration cycle A, the first expansion mechanism 12 may be connected to the cascade heat exchanger 10 via a pipe 11 between the first expansion mechanism 12 and the cascade heat exchanger 10, and connected to the evaporator 14 via a pipe 13 between the first expansion mechanism 12 and the evaporator 14.

In the high temperature refrigeration cycle B, the high pressure side compressor 16' may be configured as a two stage compressor, a twin rotary compressor, a screw compressor, or a scroll compressor so that the gaseous coolant having passed through the gas injection mechanism 5' is gas injected to the high pressure side compressor 16'.

The high pressure side compressor 16' is identical to the high pressure side compressor 16, and thus, the detailed descriptions will be omitted.

Similarly to that in the first embodiment of the present invention, the high pressure side compressor 16' may be connected to the water coolant heat exchanger 20 via the high pressure side compressor discharge pipe 17, and to the cascade heat exchanger 10 via the high pressure side compressor suction pipe 18.

The gas injection mechanism 5' may expand the second coolant condensed in the water coolant heat exchanger 20, separate the second coolant into a gaseous coolant and a liquid coolant, and then inject only the gaseous coolant into the high pressure side compressor 16'.

The gas injection mechanism 5' may include a gas/liquid separator 24' that separates a liquid coolant and a gaseous coolant from the coolant condensed in the water coolant heat exchanger 20, a coolant injection path 26' that injects the gaseous coolant separated by the gas/liquid separator 24' to the high pressure side compressor 16', an auxiliary expansion mechanism 28' that expands the coolant flowing from the water coolant heat exchanger 20 to the gas/liquid separator 24', and a gaseous coolant adjustment valve 30' that is provided over the gas/liquid separator 24'.

The gas/liquid separator 24' may be provided between the water coolant heat exchanger 20 and the second expansion mechanism 22.

The gas/liquid separator 24' may be connected to the auxiliary expansion mechanism 28' through a gas/liquid separator suction pipe 25', connected to the second expansion mechanism 22 through a liquid phase pipe 27', and connected to the high pressure side compressor 16' through a coolant injection path 26'. The coolant having passed through the auxiliary expansion mechanism 28' flows into the gas/liquid separator 24' via the gas/liquid separator suction pipe 25' and separates into a gaseous coolant and a liquid coolant in the gas/liquid separator 24'. The gaseous coolant may be injected to the high pressure side compressor 16' through the coolant injection path 26' and the liquid coolant may flow into the second expansion mechanism 22 through the liquid phase pipe 27'.

One end of the coolant injection path 26' may be connected to the gas/liquid separator 24' and the other end may be connected to the high pressure side compressor 16'.

The coolant injection path 26' may include a plurality of gas injection pipes 26A' and 26B'. The gas injection pipes 26A' and 26B' may include a first gas injection pipe 26A' that connects between the gas/liquid separator 24' and the gaseous coolant adjustment valve 30' and a second gas injection pipe 26B' that connects between the gaseous coolant adjustment valve 30' and the high pressure side compressor 16'.

The auxiliary expansion mechanism 28' expands the coolant condensed in the water coolant heat exchanger 20 before the coolant is sucked into the gas/liquid separator 24'. The auxiliary expansion mechanism 28' may be provided between the water coolant heat exchanger 20 and the gas/liquid separator 24'.

The auxiliary expansion mechanism 28' may be configured as an electronic expansion valve that may adjust the degree of opening to prevent the liquid coolant in the gas/liquid separator 24' from flowing to the coolant injection path 26'.

The auxiliary expansion mechanism 28' may be connected to the water coolant heat exchanger 20 through a pipe 29' between the water coolant heat exchanger 20 and the auxiliary expansion mechanism 28'.

The gaseous coolant adjustment valve 30' controls the gaseous coolant discharged from the gas/liquid separator 24'. The gaseous coolant adjustment valve 30' may be configured as an opening/closing valve that performs the opening/closing operation under the On/Off control, or an electronic expansion valve that may control the degree of opening.

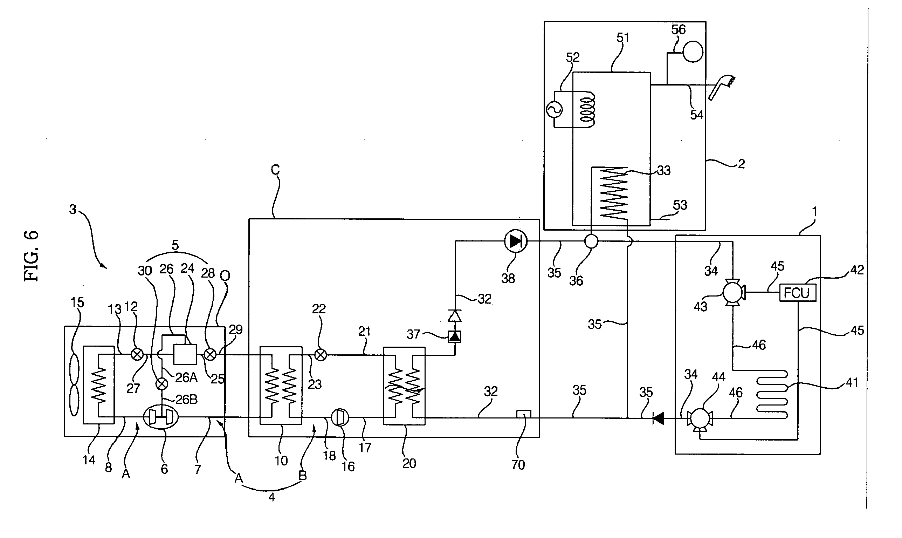

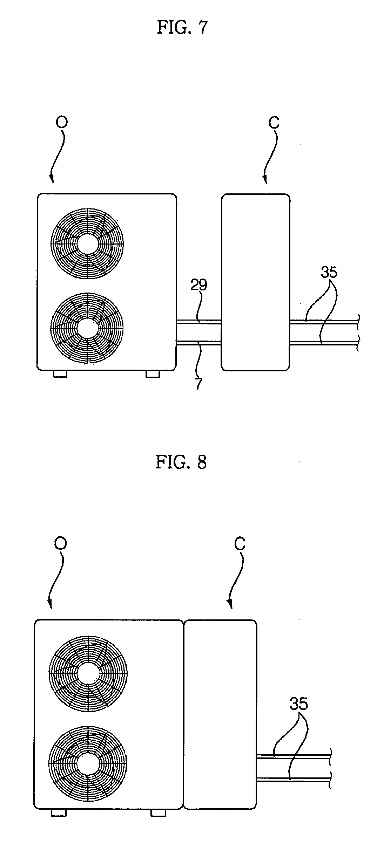

Fig. 6 is a view schematically illustrating a heat pump type cooling/heating apparatus according to a third embodiment of the present invention, Fig. 7 is a front view schematically illustrating a cascade unit and an outdoor unit separated from the cascade unit, which are included in the heat pump type cooling/heating apparatus according to the third embodiment of the present invention, and Fig. 8 is a front view schematically illustrating the cascade unit and the outdoor unit attached to the cascade unit, which are included in the heat pump type cooling/heating apparatus according to the third embodiment of the present invention.

The heat pump type cooling/heating apparatus according to the third embodiment of the present invention may include an outdoor unit O and a cascade unit C.

The outdoor unit O may include the low pressure side compressor 6, the first expansion mechanism 12, the evaporator 14, and the outdoor fan 15.

The cascade unit C may include the cascade heat exchanger 10, the high pressure side compressor 16, the water coolant heat exchanger 20, and the second expansion mechanism 22.

In case of being provided in the low temperature refrigeration cycle A, the gas injection mechanism 5 may be included in the outdoor unit O, and in case of being provided in the high temperature refrigeration cycle B, the gas injection mechanism 5 may be included in the cascade unit C.

The cascade unit C may be separated from the outdoor unit C as shown in Fig. 7 which constitutes the refrigeration cycle apparatus 3 as a "separation type", and attached to the outdoor unit C as shown in Fig. 8 which constitutes the refrigeration cycle apparatus 3 as an "integration type".

The cascade unit C may be selectively mounted on the outdoor unit O.

The invention has been explained above with reference to exemplary embodiments. It will be evident to those skilled in the art that various modifications may be made thereto without departing from the scope of the invention. Further, although the invention has been described in the context its implementation in particular environments and for particular applications, those skilled in the art will recognize that the present invention's usefulness is not limited thereto and that the invention can be beneficially utilized in any number of environments and implementations. The foregoing description and drawings are, accordingly, to be regarded in an illustrative rather than a restrictive sense.

## Claims

1. A heat pump type cooling/heating apparatus comprising a cascade cycle unit 4 that includes a cascade heat exchanger 10 that performs a heat exchange between a first coolant of a low temperature refrigeration cycle A and a second coolant of a high temperature refrigeration cycle B, and a water coolant heat exchanger 20 that heats water while the second coolant of the high temperature refrigeration cycle B is condensed, wherein the water coolant heat exchanger 20 is connected to a destination 1 or 2 via a water circulation path, comprising:
a coolant injection path 26 or 26' that is split between the cascade heat exchanger 10 and an evaporator 14 of the low temperature refrigeration cycle A to inject a coolant into a low pressure side compressor 6 of the low temperature refrigeration cycle A or split between the water coolant heat exchanger 20 and the cascade heat exchanger 10 to inject a coolant into a high pressure side compressor 16 of the high temperature refrigeration cycle A; and
a gaseous coolant adjustment valve 30 or 30' that is provided in the coolant injection path 26 or 26' and adjusted corresponding to the load of the destination 1 or 2.

2. The heat pump type cooling/heating apparatus of claim 1, further comprising:
a gas/liquid separator 24 that separates a coolant condensed in the cascade heat exchanger 10 into a liquid coolant and a gaseous coolant; and
an auxiliary expansion mechanism 28 that is provided between the cascade heat exchanger 10 and the gas/liquid separator 24 to expand a coolant.

3. The heat pump type cooling/heating apparatus of claim 2, wherein the low temperature refrigeration cycle A forms a closed path running from a low pressure side compressor 6 through the cascade heat exchanger 10 and a first expansion mechanism 12 to an evaporator 14, and the high temperature refrigeration cycle B forms a closed path running from a high pressure side compressor 16 through the water coolant heat exchanger 20 and a second expansion mechanism 22 to the cascade heat exchanger 10, and wherein the gas/liquid separator 24 is provided between the cascade heat exchanger 10 and the first expansion mechanism 12.

4. The heat pump type cooling/heating apparatus of claim 1, further comprising:
a gas/liquid separator 24' that separates a coolant condensed in the water coolant heat exchanger 20 into a liquid coolant and a gaseous coolant; and
an auxiliary expansion mechanism 28' that is provided between the water coolant heat exchanger 20 and the gas/liquid separator 24' to expand a coolant.

5. The heat pump type cooling/heating apparatus of claim 4, wherein the low temperature refrigeration cycle A forms a closed path running from a low pressure side compressor 6 through the cascade heat exchanger 10 and a first expansion mechanism 12 to an evaporator 14, and the high temperature refrigeration cycle B forms a closed path running from a high pressure side compressor 16 through the water coolant heat exchanger 20 and a second expansion mechanism 22 to the cascade heat exchanger 10, and wherein the gas/liquid separator 24' is provided between the water coolant heat exchanger 20 and the second expansion mechanism 22.

6. The heat pump type cooling/heating apparatus of claim 3 or 5, wherein the low pressure side compressor 6, the cascade heat exchanger 10, the first expansion mechanism 12, the evaporator 14, the high pressure side compressor 16, the second expansion mechanism 22, the water coolant heat exchanger 20, the coolant injection path 26 or 26', the gaseous coolant adjustment valve 30 or 30', the gas/liquid separator 24 or 24', and the auxiliary expansion mechanism 28 or 28' are installed in a single unit.

7. The heat pump type cooling/heating apparatus of claim 3 or 5, wherein the low pressure compressor 6, the first expansion mechanism 12, and the evaporator 14 are installed in an outdoor unit O, and wherein the cascade heat exchanger 10, the high pressure side compressor 16, the second expansion mechanism 22, and the water coolant heat exchanger 20 are installed in a cascade unit C, and wherein the coolant injection path 26 or 26', the gaseous coolant adjustment valve 30 or 30', the gas/liquid separator 24 or 24', and the auxiliary expansion mechanism 28 or 28' are installed in one of the outdoor unit O and the cascade unit C.

8. The heat pump type cooling/heating apparatus of claim 7, wherein the cascade unit C is integrally mounted on the outdoor unit O.

9. The heat pump type cooling/heating apparatus of claim 7, wherein the cascade unit C is separated from the outdoor unit O.

10. The heat pump type cooling/heating apparatus of claim 1, further comprising:
a load sensor 70 that senses the load of the destination 1 or 2; and
a controller 80 that controls the gaseous coolant adjust valve 30 or 30' according to a sensing result of the load sensor 70.

11. The heat pump type cooling/heating apparatus of claim 10, wherein the load sensor 70 is provided over the water circulation path.

12. The heat pump type cooling/heating apparatus of claim 11, wherein the controller 80 opens the gaseous coolant adjustment valve 30 or 30' when a temperature sensed by the load sensor 70 is less than a predetermined valve, and closes the gaseous coolant adjustment valve 30 or 30' when a temperature sensed by the load sensor 70 is more than the predetermined valve.

13. The heat pump type cooling/heating apparatus of any one of claims 1 to 12, wherein the destination 1 or 2 includes a room heating unit 1 connected to the water circulation path and a water heating unit 2 connected to the water circulation path.

14. The heat pump type cooling/heating apparatus of claim 1, wherein at least one of the low pressure side compressor 6 and the high pressure compressor 16, which is connected to the coolant injection path 26 or 26', is configured as one of a two stage compressor, a screw compressor, and a scroll compressor.

15. The heat pump type cooling/heating apparatus of claim 1, wherein at least one of the low pressure side compressor 6 and the high pressure compressor 16, which is connected to the coolant injection path 26 or 26', is configured as a twin rotary compressor.
